(19) **Europäisches Patentamt / European Patent Office / Office européen des brevets**

(11) **EP 4 170 426 B1**

(12) **FASCICULE DE BREVET EUROPEEN**

(45) Date de publication et mention de la délivrance du brevet:
**30.04.2025 Bulletin 2025/18**

(21) Numéro de dépôt: **22205439.7**

(22) Date de dépôt: **14.10.2020**

(51) Classification Internationale des Brevets (IPC):
**G03B 21/625** (2014.01)   **G02B 5/124** (2006.01)

(52) Classification Coopérative des Brevets (CPC):
**G03B 21/625; G02B 5/124**

(54) **ECRAN MUNI DE MICROSTRUCTURES RETROREFLECHISSANTES**

SCHIRM MIT REFLEKTIERENDEN MIKROSTRUKTUREN

DISPLAY WITH RETROREFLECTIVE MICROSTRUCTURES

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **27.11.2019 FR 1913341**

(43) Date de publication de la demande:
**26.04.2023 Bulletin 2023/17**

(62) Numéro(s) de document de la (des) demande(s) initiale(s) en application de l'article 76 CBE:
**20789613.5 / 4 066 057**

(73) Titulaire: **Commissariat à l'Energie Atomique et aux Energies Alternatives**
**75015 Paris (FR)**

(72) Inventeurs:
• **MARTINEZ, Christophe**
**38054 Grenoble Cedex 09 (FR)**
• **LEE, Yann**
**38054 Grenoble Cedex 09 (FR)**

(74) Mandataire: **Cabinet Beaumont**
**4, Place Robert Schuman**
**B.P. 1529**
**38025 Grenoble Cedex 1 (FR)**

(56) Documents cités:
EP-A1- 2 770 364    US-A- 5 734 501
US-A1- 2010 073 751    US-A1- 2018 203 244

**Description**

La présente demande de brevet revendique la priorité de la demande de brevet français FR19/13341.

Domaine technique

La présente demande concerne le domaine des écrans rétroréfléchissants. Elle vise plus particulièrement un écran muni de microstructures réfléchissantes en forme de coins de cubes, un procédé de réalisation d'un tel écran, et un moule pour la réalisation d'un tel écran. Elle vise plus spécifiquement un procédé de fabrication d'un moule pour la fabrication d'un écran rétroréfléchissant.

Technique antérieure

Le demandeur a déjà proposé, dans les demandes de brevet US2017059862 et US2017197338, des écrans munis de microstructures rétroréfléchissantes en forme de coins de cube, et des procédés de fabrication de tels écrans. Les solutions décrites dans ces demandes de brevet permettent notamment de réaliser des écrans partiellement transparents et partiellement rétroréfléchissants, adaptés à des applications de projection d'images sur des surfaces transparentes telles que des pare-brises de véhicules, notamment de véhicules automobiles.

Il serait souhaitable d'améliorer au moins en partie certains aspects des solutions décrites dans les demandes de brevet susmentionnées.

Résumé de l'invention

L'invention est exposée dans le jeu de revendications joint. Selon l'invention telle que définie dans la revendication 1, un mode de réalisation prévoit un procédé de fabrication d'un moule pour la fabrication d'un écran rétroréfléchissant, comprenant les étapes successives suivantes :

- former des cavités parallélépipédiques du côté d'une face d'un substrat ;
- remplir les cavités par une résine photosensible ;
- insoler la résine au moyen d'un faisceau lumineux incliné par rapport au fond des cavités parallélépipédiques, de façon qu'une partie de la résine ne voie pas le faisceau d'insolation ; et
- retirer la partie insolée de la résine.

Des variantes de la fabrication de ce moule sont définies dans les revendications dépendantes.

Un autre mode de réalisation prévoit un procédé de fabrication d'un écran rétroréfléchissant comprenant une étape de moulage de ladite face du film au moyen d'un moule tel que défini ci-dessus, suivie d'une étape de dépôt d'une couche métallique réfléchissante sur toute ladite face du film.

Selon un mode de réalisation, le procédé comporte en outre une étape de retrait de la couche métallique réfléchissante en dehors des microrenfoncements, par polissage mécano-chimique.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1A est une vue en perspective illustrant de façon schématique un exemple d'une microstructure d'un écran rétroréfléchissant selon un mode de réalisation ;

la figure 1B est une vue de face de la microstructure de la figure 1A ;

la figure 1C est une vue en coupe de la microstructure selon le plan 1C-1C de la figure 1B ;

les figures 2A à 2E illustrent plusieurs étapes successives d'un procédé de fabrication d'un écran rétroréfléchissant incorporant le procédé de fabrication d'un moule primaire selon l'invention;

la figure 3 est une vue de dessus schématique et partielle d'un exemple d'un écran rétroréfléchissant selon un mode de réalisation ;

la figure 4 est une vue de dessus schématique et partielle d'un autre exemple d'un écran rétroréfléchissant selon un mode de réalisation ;

la figure 5 est une vue de dessus schématique et partielle d'un autre exemple d'un écran rétroréfléchissant selon un mode de réalisation ;

la figure 6 illustre de façon schématique un système de projection d'une image sur un écran rétroréfléchissant selon un mode de réalisation ;

la figure 7 illustre de façon schématique un exemple de réalisation d'un moule pour la fabrication d'un écran rétroréfléchissant selon un mode de réalisation ; et

la figure 8 illustre plus en détail un exemple de réalisation d'un écran rétroréfléchissant du type décrit en relation avec la figure 6.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les différentes utilisations qui peuvent être faites des écrans rétroréfléchissants décrits n'ont pas été détaillées.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près, et encore plus préférentiellement à 1 % près, ou, lorsqu'il s'agit de valeurs angulaires ou assimilées, (par exemple les qualificatifs d'orientation tels que les termes parallèle, orthogonal, vertical, horizontal, etc.) à 5 degrés près, de préférence à 1 degré près, et encore plus préférentiellement à 0,1 degré près.

Les demandes de brevet US2017059862 et US2017197338 susmentionnées décrivent des exemples de réalisation d'un écran rétroréfléchissant comportant un film dont une face comprend une pluralité de microrenfoncements, chaque microrenfoncement ayant un fond sensiblement parallèle au plan moyen de l'écran et des première et deuxième parois latérales sensiblement orthogonales entre elles et sensiblement orthogonales au fond, les première et deuxième parois latérales et le fond de chaque microrenfoncement se rejoignant en un même point et formant un trièdre. Ces écrans sont conçus pour présenter une efficacité en rétroréflexion maximale pour un angle d'incidence d'environ 60 degrés.

On propose ici de modifier la forme des microrenfoncements pour d'une part améliorer l'efficacité en rétroréflexion de l'écran, et d'autre part contrôler l'angle d'incidence pour lequel l'efficacité en rétroréflexion est maximale de façon à permettre d'adresser des angles d'incidence plus variés.

Les études menées par les inventeurs ont montré que la prévision de microrenfoncements en forme de pyramides tronquées permet d'augmenter l'efficacité en rétroréflexion par rapport à des écrans du type décrit dans les demandes de brevet susmentionnées.

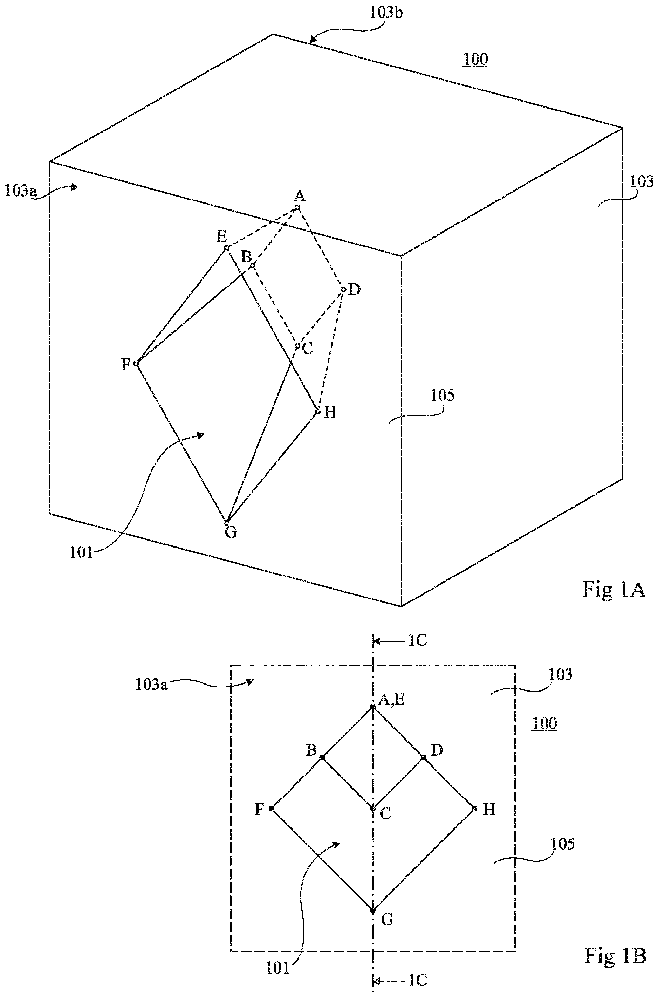

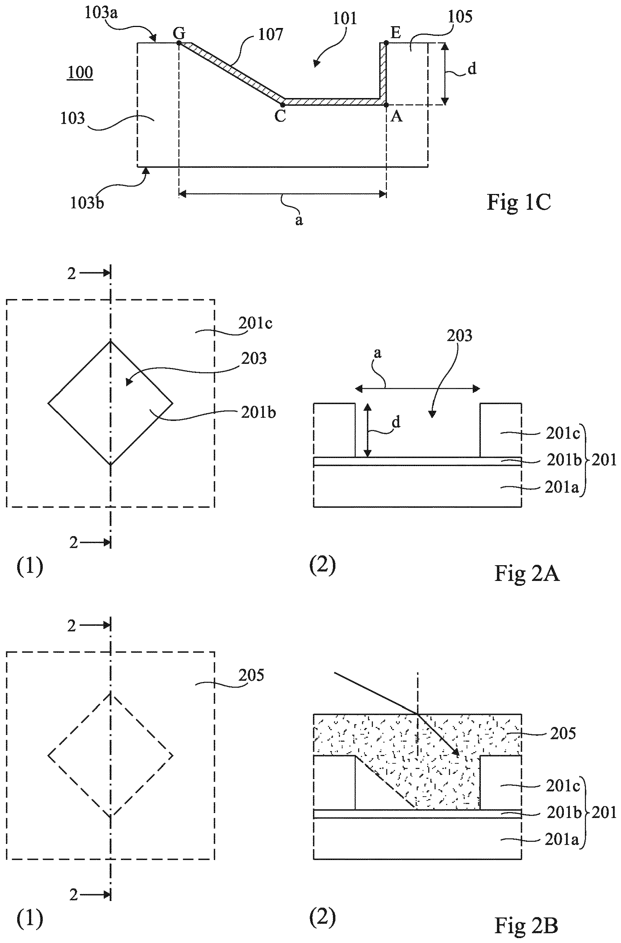

Les figures 1A, 1B et 1C représentent de façon schématique un exemple d'un microrenfoncement 101 d'un écran rétroréfléchissant 100, en forme de pyramide tronquée. La figure 1A est une vue en perspective, la figure 1B est une vue de face, et la figure 1C est une vue en coupe selon le plan 1C-1C de la figure 1B.

L'écran 100 comprend un film 103 comportant une première face principale 103a appelée face avant et une deuxième face principale 103b opposée à la face 103a, appelée face arrière. Le microrenfoncement 101 est formé dans le film 103, du côté de la face 103a du film. En pratique, l'écran 100 peut comporter un grand nombre de microrenfoncements 101, par exemple identiques ou similaires, formés du côté de la face 103a du film 103. L'écran 100 est destiné à être éclairé du côté de la face 103a du film 103. A titre d'exemple, le film 103 est en un matériau plastique, par exemple de type polyméthacrylate de méthyle. Dans cet exemple, le film 103 est en un matériau transparent. La face 103b du film 103 est par exemple sensiblement plane. Chaque microrenfoncement 101 est entouré latéralement et séparé des autres microrenfoncements par une portion 105 du film 103 dans laquelle la face 103a du film est sensiblement plane et parallèle à la face 103b. Les portions 105 définissent des régions transparentes de l'écran, tandis que les microrenfoncements 101 définissent des régions rétroréfléchissantes de l'écran. Ainsi, l'écran 100 est partiellement transparent et partiellement rétroréfléchissant. Le taux d'occupation de la surface de l'écran par les microrenfoncements 101 définit la transparence de l'écran. Pour obtenir une bonne transparence permettant la visualisation d'une scène à travers l'écran, le taux de recouvrement de l'écran 100 par les microrenfoncements 101 est par exemple inférieur à 50 %, et de préférence inférieur à 20 %. Dans cet exemple, les parois latérales et le fond de chaque microrenfoncement 101 sont revêtues par une couche métallique réfléchissante 107. Par souci de clarté, la couche métallique 107 n'a pas été représentée sur les figures 1A et 1B et est visible uniquement sur la figure 1C. Comme cela apparaît sur la figure 1C, pour préserver la transparence de l'écran dans les régions 105, la couche 107 ne recouvre pas la face 103a du film 103 au niveau des régions 105.

L'écran 100 peut en outre comporter un film de protection transparent (non représenté) collé du côté de la face supérieure 103a du film 103, par exemple au moyen d'une couche de colle transparente (non représentée) comblant les microrenfoncements 101. De préférence, le film de protection et la colle transparente ont sensiblement le même indice de réfraction que le film 103.

Dans l'exemple des figures 1A, 1B et 1C, le microrenfoncement 101 a la forme d'une pyramide tronquée à base quadrilatérale. On appellera ci-après respectivement E, F, G et H les quatre sommets du quadrilatère formant la base de la pyramide tronquée, et A, B, C et D les quatre sommets du quadrilatère formant la face sommitale de la pyramide tronquée, c'est-à-dire sa face opposée à la base EFGH.

Le microrenfoncement 101 comprend une ouverture définie par la base EFGH de la pyramide tronquée. La base EFGH est parallèle au plan moyen de l'écran 100, qui peut être défini comme étant un plan parallèle à la face 103b du film 103. Plus particulièrement, dans cet exemple, la base EFGH est située dans le plan de la face avant 103a du film 103.

Le microrenfoncement 101 comprend en outre un fond défini par la face sommitale ABCD de la pyramide tronquée. Le fond ABCD du microrenfoncement 101 est lui aussi parallèle au plan moyen de l'écran.

Le microrenfoncement 101 comprend de plus quatre parois latérales définies respectivement par les faces ABFE, ADHE, DCGH et BCGF de la pyramide tronquée. Parmi ces quatre parois latérales, les parois ABFE et ADHE sont sensiblement orthogonales entre elles et sensiblement orthogonales au fond ABCD. Les parois ABFE et ADHE et le fond ABCD se rejoignent au point A et définissent un trièdre trirectangle ou coin de cube ayant le point A pour sommet. Les parois latérales DCGH et BCGF du microrenfoncement 101 sont quant à elles inclinées, c'est-à-dire que l'angle entre la paroi DCGH et le fond ABCD du microrenfoncement 101 et l'angle entre la paroi BCGF et le fond ABCD du microrenfoncement 101 sont tous deux supérieurs à 90 degrés.

De préférence, pour obtenir une meilleure efficacité en rétroréflexion du microrenfoncement 101, la base EFGH et la face sommitale ABCD de la pyramide tronquée sont carrées. De plus, dans un mode de réalisation préféré, la longueur du côté du carré EFGH est sensiblement égale à deux fois la longueur du côté du carré ABCD. Les études réalisées ont en effet montré que ce rapport de dimension entre l'ouverture et le fond du microrenfoncement permet de maximiser l'efficacité en rétroréflexion de la structure (ceci permet que les pans inclinés de la pyramide tronquée ne gênent pas la vision. Ils sont alors sensiblement dans l'axe de l'utilisateur et du projecteur dans la configuration où l'intensité rétroréfléchie est maximale). Plus généralement, la longueur du côté du carré EFGH est de préférence inférieure ou égale à la longueur du côté du carré ABCD. Dans ces conditions, et en désignant par d la profondeur du microrenfoncement 101, c'est-à-dire la longueur de l'arête EA de la pyramide tronquée, par a la largeur de l'ouverture du microrenfoncement, c'est-à-dire la longueur de la diagonale EG de la base EFGH de la pyramide tronquée, et par n l'indice optique du matériau remplissant la cavité 101, on peut montrer que l'angle d'incidence $\alpha i$ pour lequel l'efficacité en rétroréflexion de la structure est maximale satisfait la relation suivante :

[Math 1]

$$ a = 2d \times \tan\left(\sin^{-1}\left(\frac{1}{n}\sin \alpha i\right)\right) $$

Pour une profondeur d fixée, on peut calculer par cette formule la largeur a à prévoir en fonction de l'angle d'incidence $\alpha i$ visé. En fonction de l'application considérée, on pourra par exemple prévoir un écran comportant des microrenfoncements 101 de même profondeur d mais présentant des largeurs a différentes, adaptées pour adresser différents angles d'incidence $\alpha i$.

A titre d'exemple, pour une profondeur d de l'ordre de 60 $\mu$m et dans le cas où les microrenfoncement métallisés sont revêtus par une couche de protection en un matériau d'indice optique de l'ordre de 1,5, l'angle d'incidence $\alpha i$ peut prendre une valeur allant de 10 à 60 degrés pour une longueur de diagonale a allant de 14 à 85 $\mu$m.

Les figures 2A à 2E illustrent des étapes successives d'un exemple d'un procédé de fabrication d'un écran rétroréfléchissant 100 du type décrit en relation avec les figures 1A, 1B et 1C. Sur les figures 2A à 2E, la réalisation d'un unique microrenfoncement 101 de l'écran a été représentée, étant entendu que, en pratique, un grand nombre de microrenfoncements, par exemple identiques ou similaires, peuvent être réalisés simultanément. Chacune des figures 2A à 2E comprend deux vues (1) et (2). La vue (1) est une vue de face de la structure représentée, et la vue (2) est une vue en coupe selon le plan 2-2 de la vue (1).

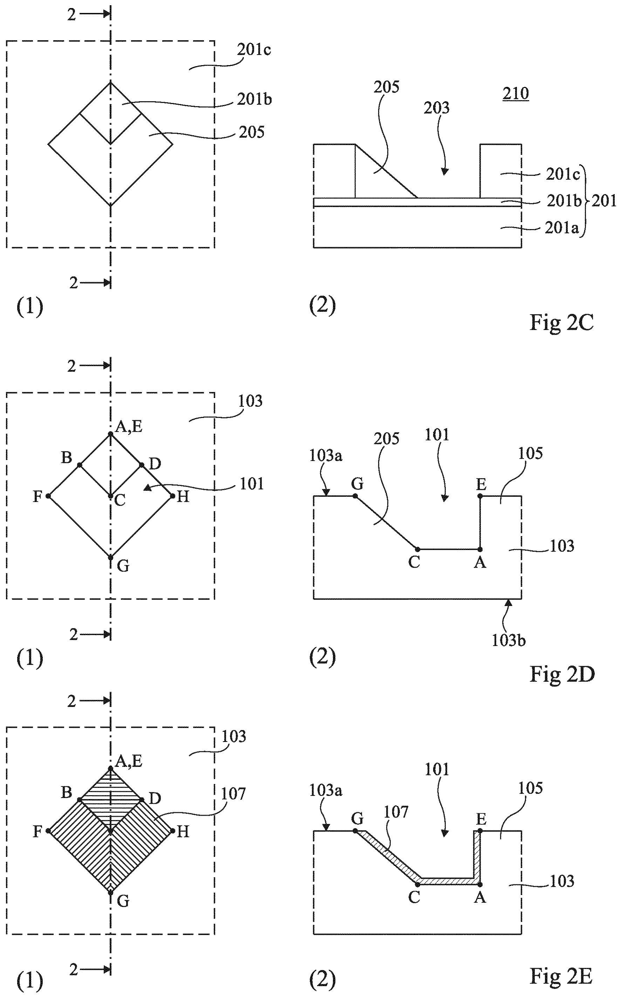

Les figures 2A, 2B et 2C illustrent des étapes de fabrication, selon l'invention, d'un moule primaire 210 destiné à être utilisé lors de la fabrication de l'écran 100 proprement dit. Les figures 2D et 2E illustrent des étapes de fabrication de l'écran 100 à partir du moule primaire 210.

La figure 2A illustre une étape de gravure d'une cavité 203 du côté de la face supérieure d'un substrat 201 dans lequel on souhaite former le moule primaire 210. Dans cet exemple, le substrat 201 comprend un empilement d'une couche support inférieure 201a, d'une couche intermédiaire 201b, et d'une couche supérieure 201c. Dans l'exemple représenté, les faces principales des couches 201a, 201b et 201c sont sensiblement horizontales. La couche intermédiaire 201b est en un matériau tel que le matériau de la couche supérieure 201c soit gravable sélectivement par rapport à la couche 201b. A titre d'exemple, la couche supérieure 201c est en silicium et la couche intermédiaire 201b est en oxyde de silicium. La couche supérieure 201c est disposée sur et en contact avec la face supérieure de la couche intermédiaire 201b. La couche intermédiaire 201b est par exemple disposée sur et en contact avec la face supérieure de la couche support inférieure 201a. A titre d'exemple, la couche support inférieure 201a est en silicium.

L'épaisseur de la couche supérieure 201c du substrat définit la profondeur d des microrenfoncements 101 de l'écran 100. A titre d'exemple, l'épaisseur de la couche supérieure 201c est comprise dans la plage allant de 10 à 500 $\mu$m et de préférence dans la plage allant de 50 à 200 $\mu$m.

La cavité 203 s'étend verticalement depuis la face supérieure de la couche 201c et s'interrompt sur la face supérieure de la couche intermédiaire 201b. Le procédé de gravure utilisé pour former les cavités 203 est choisi pour graver le substrat de façon sélective par rapport au matériau de la couche 201b. A titre d'exemple, les cavités 203 sont réalisées par gravure ionique réactive profonde (DRIE). La couche 201b forme une couche d'arrêt de gravure, c'est-à-dire que la gravure des cavités 203 s'interrompt sur la face supérieure de la couche 201b. Ainsi, le fond de chaque cavité 203 est formé par la face supérieure de la couche 201b. Un masque de gravure, non représenté, peut être disposé sur la face supérieure de la couche 201c pendant la gravure, pour définir la forme des cavités 203.

Dans cet exemple, la cavité 203 a, vue de dessus, une forme carrée, dont la longueur de diagonale définit la longueur de diagonale supérieure EG (distance a) du microrenfoncement 101 que l'on cherche à réaliser. Plus particulièrement, la cavité 203 a la forme d'un parallélépipède rectangle dont les faces supérieure et inférieure, carrées, correspondent respectivement à l'ouverture et au fond de la cavité. Les faces latérales du parallélépipède rectangle correspondent aux parois latérales de la cavité 203 et sont sensiblement orthogonales aux faces supérieure et inférieure du substrat 201.

La figure 2B illustre une étape de dépôt d'une couche de résine photosensible 205 sur la face supérieure de la structure obtenue à l'issue de l'étape de gravure de la figure 2A. L'épaisseur de la couche de résine 205 est supérieure ou égale à la profondeur d de la cavité 203, de façon que la résine 205 comble entièrement la cavité 203. Dans l'exemple représenté, l'épaisseur de la couche de résine 205 est supérieure à la profondeur de la cavité 203.

La figure 2B illustre en outre une étape postérieure au dépôt de la couche de résine 205, au cours de laquelle on vient insoler la résine 205 avec un angle d'éclairement correspondant à l'angle d'incidence $\alpha i$ pour lequel on souhaite que l'efficacité en rétroréflexion du microrenfoncement 101 que l'on cherche à réaliser soit maximale. Comme l'illustre la figure 2B, l'angle d'incidence du faisceau lumineux d'insolation de la résine 205 associé à l'opacité de la couche supérieure 201c du substrat produit une ombre dans la cavité 203, au niveau des deux parois latérales inférieures (dans l'orientation de la vue (1) de la figure 2B) de la cavité 203. Ainsi, une partie de la résine 205 n'est pas insolée à l'intérieur de la cavité 203. Sur la vue (2) de la figure 2B la région insolée de la couche 205 est représentée avec une texturation, tandis que la région non isolée de la couche 205 est représentée sans texturation, les deux régions étant séparées par un trait interrompu.

La figure 2C illustre la structure obtenue à l'issue d'une étape de développement de la couche de résine photosensible 205. Dans cet exemple la résine photosensible 205 est une résine négative. Ainsi, lors de l'étape de développement, seule la partie non insolée de la résine est conservée. La partie insolée est quant à elle dissoute et retirée au moyen d'une solution chimique de développement. La partie restante de la résine 205 comble partiellement la cavité 203.

A ce stade, la cavité 203 a la même forme de pyramide tronquée que le microrenfoncement 101 que l'on cherche à réaliser. En particulier, la partie restante de la résine 205 définit les faces inclinées BCGF et DCGH de la pyramide tronquée.

La structure obtenue à l'issue des étapes des figures 2A, 2B et 2C correspond à un moule primaire 210 destiné à être utilisé pour la fabrication de l'écran 100.

La figure 2D illustre une étape au cours de laquelle les structurations de la surface supérieure du moule primaire 210 sont répliquées, par moulage, sur la face 103a (correspondant à la face supérieure dans l'orientation de la figure 2D) du film 103. La réplication des motifs du moule primaire 210 sur la face 103a du film 103, passe par la formation, à partir du moule primaire 210, d'un moule secondaire (non représenté) ayant une forme complémentaire de celle du moule primaire 210, c'est-à-dire présentant des protubérances en forme de pyramides tronquées complémentaires des cavités 203 du moule primaire 210. Les structurations de la face 103a du film 103 sont alors obtenues, à partir du moule secondaire, par thermoformage ou par toute autre technique de moulage adaptée. A titre d'exemple, le moule secondaire peut être en métal ou en un matériau plastique présentant une température de déformation supérieure à celle du film 103.

La figure 2E illustre une étape de formation d'une métallisation réfléchissante 107 sur les parois latérales et sur le fond du microrenfoncement 101. La métallisation 107 est par exemple en aluminium. A titre d'exemple, pour former la métallisation 107, une couche métallique réfléchissante est déposée, par un procédé de dépôt conforme, par exemple par pulvérisation, sur toute la surface supérieure 103a du film 103, c'est-à-dire non seulement sur les parois latérales et sur le fond des microrenfoncements 101, mais également sur la face supérieure des régions 105 du film 103 séparant latéralement les microrenfoncements 101 les uns des autres. Le métal déposé peut ensuite être retiré au niveau des régions 105 par polissage mécano-chimique. Lors de cette étape, les portions de la couche métallique revêtant les parois latérales et le fond des microrenfoncements 101 sont conservées, formant les métallisations réfléchissantes 107.

On obtient ainsi un écran 100 présentant des portions rétroréfléchissantes régulièrement réparties sur toute sa surface, correspondant aux microrenfoncements métallisés du film 103. Chaque portion d'écran rétroréfléchissante est entourée et séparée des autres portions rétroréfléchissantes par une portion d'écran transparente. Les portions d'écran transparentes correspondent aux régions non structurées 105 du film 103.

Une fois les métallisations 107 déposées, on peut éventuellement prévoir une étape de collage d'un film de protection transparent (non représenté) sur la face supérieure 103a du film 103, par exemple au moyen d'une couche de colle transparente (non représentée) comblant les microrenfoncements 101, tel que décrit en relation avec les figures 9A et 9B des demandes de brevet US2017059862 et US2017197338 susmentionnées.

Un avantage de l'écran 100 décrit ci-dessus est qu'il présente une très bonne efficacité en rétroréflexion à l'angle d'incidence $\alpha i$ pour lequel les microrenfoncements 101 ont été dimensionnés. De plus, le contrôle de l'angle d'incidence $\alpha i$ pour lequel l'efficacité en rétroréflexion est maximale est aisé à réaliser, puisque cet angle dépend directement de la longueur de diagonale a de l'ouverture d'entrée des microrenfoncements. On pourra en particulier aisément réaliser un écran comportant des portions rétroréfléchissantes distinctes présentant une efficacité en rétroréflexion maximale pour des angles d'incidence $\alpha i$ distincts.

Un autre avantage de l'écran 100 décrit ci-dessus est que, pour un rendement en rétroréflexion donné, il permet de réduire la surface occupée par les microrenfoncements rétroréfléchissants et donc d'augmenter la transparence de l'écran par rapport à des écrans du type décrit dans les demandes de brevet susmentionnées.

Un autre avantage de l'écran 100 décrit ci-dessus est que sa réalisation est facilitée par le fait que chaque microrenfoncement 101 présente deux parois latérales BCGF et DCGH inclinées. Ceci permet notamment de faciliter le démoulage du film 103 lors de l'étape de moulage décrite en relation avec la figure 2D.

Dans la plupart des applications, et notamment dans les applications de projection d'une image sur un pare-brise de véhicule, la source lumineuse éclairant l'écran rétroréfléchissant n'est pas placée exactement dans l'axe du regard de l'utilisateur. Ainsi, l'écran 100 doit de préférence être adapté à diffuser la lumière rétroréfléchie dans un cône de diffusion englobant les pupilles de l'utilisateur. Les effets de diffraction sur les bords des microrenfoncements et/ou les inévitables imperfections de surface de l'écran peuvent suffire à obtenir l'effet de diffusion requis. Pour amplifier et/ou contrôler cette diffusion, on peut par exemple jouer sur la rugosité des flancs et du fond des cavités 203 du moule primaire 210. A titre de variante, on pourra utiliser un procédé du type décrit en relation avec les figures 11A à 11G de la demande de brevet US2017197338 susmentionnée pour réaliser un motif de diffusion contrôlé au fond des cavités 203 du moule primaire 210.

On notera que dans la structure rétroréfléchissante définie par le microrenfoncement 101 de l'écran 100, les parois inclinées correspondant aux faces BCGF et DCGH de la pyramide tronquée ne participent pas à la rétroréflexion à l'angle d'incidence $\alpha i$ pour lequel la structure a été dimensionnée. Pour éviter des réflexions parasites, on pourra prévoir de dégrader la réflexion sur ces faces. Pour cela, une étape optionnelle de microstructuration conduisant à augmenter la rugosité de la surface de la résine 205 peut être prévue à l'issue des étapes décrites en relation avec les figures 2A, 2B et 2C.

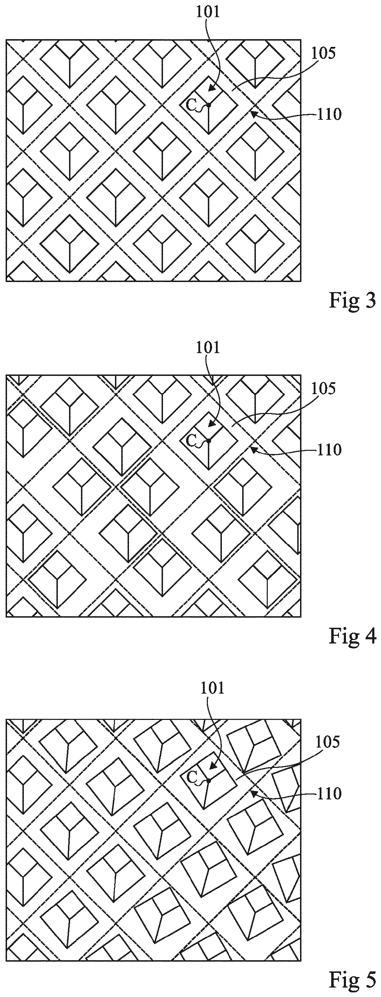

Les figures 3, 4 et 5 sont des vues de dessus illustrant respectivement trois exemples de distribution des microrenfoncements 101 dans un écran 100 du type décrit ci-dessus. Par souci de clarté, les métallisations réfléchissantes 107 n'ont pas été représentées sur les figures 3, 4 et 5.

Dans les exemples des figures 3, 4 et 5, les microrenfoncements 101 ont tous les mêmes dimensions. En vue de dessus, l'écran peut être décomposé en une pluralité de cellules 110 de mêmes dimensions agencées en matrice selon des rangées et des colonnes. Chaque cellule comprend un unique microrenfoncement 101, entouré latéralement par une région 105 non structurée. Dans cet exemple, les cellules 110 ont, en vue de dessus, une forme carrée.

Dans l'exemple de la figure 3, les microrenfoncements 101 sont distribués selon un agencement matriciel régulier. Plus particulièrement, dans cet exemple, en vue de dessus, chaque microrenfoncement 101 est disposé au centre de la cellule 110 à laquelle il appartient. Autrement dit, le point C du fond de chaque microrenfoncement 101 coïncide sensiblement, en vue de dessus, avec le centre de la cellule 110.

Dans l'exemple de la figure 4, les microrenfoncements 101 présentent une distribution aléatoire au sein d'une grille fixe. Plus particulièrement dans cet exemple, en vue de dessus, les positions des différents microrenfoncements 101 au sein de leurs cellules 110 respectives varient selon une distribution aléatoire ou pseudo-aléatoire.

Dans l'exemple de la figure 5, l'écran présente des microrenfoncements 101 d'orientations différentes, ce qui permet, pour un angle d'incidence donné, d'adresser des plans d'incidence distincts. Plus particulièrement, dans cet exemple, en vue de dessus, chaque microrenfoncement 101 est disposé au centre de la cellule 110 à laquelle il appartient, mais l'orientation du microrenfoncement par rapport à la cellule varie en fonction de la position de la cellule dans la matrice.

Pour réaliser un écran de grandes dimensions, on pourra juxtaposer une pluralité de moules du type obtenu par le procédé décrit en relation avec les figures 2A à 2E. En fonction des contraintes de l'application, on pourra notamment prévoir de juxtaposer des moules présentant des propriétés différentes, notamment des tailles et/ou des orientations de microrenfoncements distinctes, de façon à adresser des angles d'incidence ou des plans d'incidence distincts.

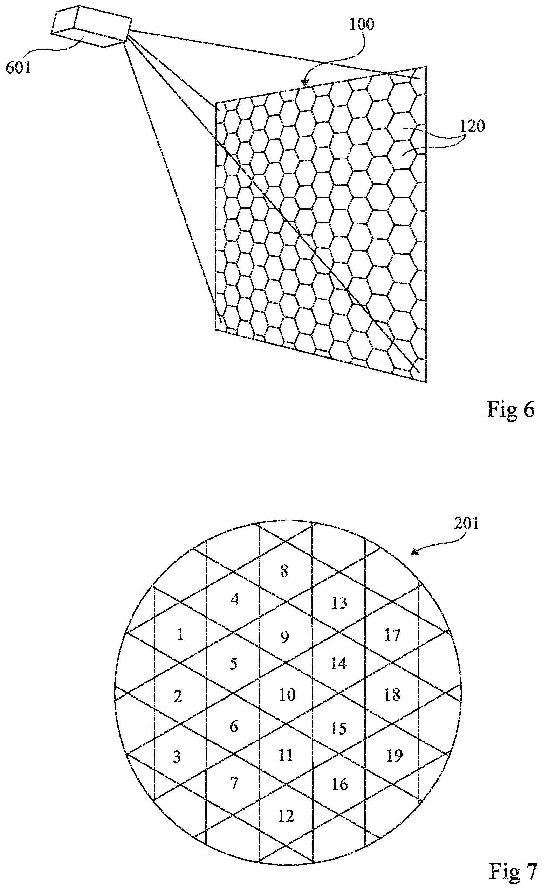

La figure 6 illustre de façon schématique un système de projection d'une image sur un écran rétroréfléchissant 100 du type décrit ci-dessus.

L'écran 100 du système de la figure 6 a par exemple une forme générale sensiblement rectangulaire. Le système de la figure 6 comprend un projecteur 601 agencé pour projeter une image sur sensiblement toute la surface de l'écran 100.

Dans l'exemple de la figure 6, l'écran peut être décomposé en une pluralité de zones 120 juxtaposées. Dans l'exemple représenté, les zones 120 ont toutes sensiblement la même forme hexagonale et sensiblement les mêmes dimensions, et sont juxtaposées selon une distribution en nid d'abeille.

On peut associer à chaque zone 120 un angle d'incidence privilégié et une orientation d'incidence privilégiée. Au sein de chaque zone 120, les microrenfoncement 101 ont tous sensiblement les mêmes dimensions et la même orientation, choisies en fonction de l'angle d'incidence et de l'orientation d'incidence privilégiés de la zone 120. Les microrenfoncements 101 de zones 120 différentes peuvent en revanche avoir des dimensions différentes et/ou des orientations différentes.

La figure 7 illustre de façon schématique un exemple de réalisation d'un moule pour la fabrication d'un écran du type décrit en relation avec la figure 6. Dans cet exemple, le moule est réalisé à partir d'un substrat 201 de forme générale circulaire, selon un procédé identique ou similaire à ce qui a été décrit en relation avec les figures 2A à 2C. Dans cet exemple, une pluralité de cellules de base sont définies dans le moule, correspondant respectivement aux différentes zones 120 de l'écran 100. Dans l'exemple représenté, 19 cellules de base numérotées de 1 à 19 sont réalisées. Dans cet exemple, les cellules de base 1 à 19 ont toutes sensiblement la même forme hexagonale et les mêmes dimensions, correspondant à la forme et aux dimensions des zones 120 de l'écran 100 de la figure 6.

A titre d'exemple, les microrenfoncements des cellules de base ont tous la même orientation mais ont des dimensions différentes ce qui permet, dans cet exemple, d'adresser 19 angles d'incidence $\alpha i$ distincts.

Le substrat 201 est ensuite découpé de façon à séparer les unes des autres les différentes cellules de base. Sur la figure 7, les chemins de découpe ont été représentés par des traits pleins rectilignes.

Après découpe, chaque cellule de base peut être orientée selon 6 orientations différentes, ce qui permet d'adresser 6 orientations d'incidence différentes pour chaque angle d'incidence $\alpha i$.

Les cellules de base peuvent ainsi être assemblées pour réaliser des surfaces de projection adaptées à diverses applications.

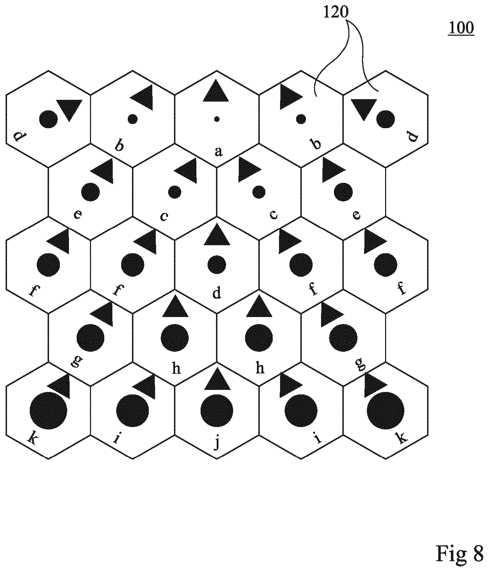

La figure 8 illustre plus en détail un exemple d'un écran rétroréfléchissant 100 du type décrit en relation avec la figure 6, formé au moyen d'un moule réalisé par assemblage de cellules de base du type décrit en relation avec la figure 7. Dans cet exemple, 11 types de cellules de base ont été utilisés, correspondant aux zones 120 désignées respectivement par les lettres a, b, c, d, e, f, g, h, i, j et k sur la figure 8. Sur chaque zone 120, un point noir a été représenté, dont la taille schématise la dimension des microrenfoncements 101 dans la zone. De plus, sur chaque zone 120, une flèche noire a été représentée, dont l'orientation schématise l'orientation des microrenfoncements 101 dans la zone.

On pourra en outre associer à chaque zone 120 des propriétés de diffusion spécifiques. A titre d'exemple, au sein de chaque zone 120, les microrenfoncements 101 ont tous sensiblement les mêmes propriétés de diffusion, choisies en fonction de la position de la zone 120 sur l'écran. Les microrenfoncements de zones 120 différentes peuvent en revanche avoir des propriétés de diffusion différentes.

Divers modes de réalisation et variantes ont été décrits. La personne du métier comprendra que certaines caractéristiques de ces divers modes de réalisation et variantes pourraient être combinées, et d'autres variantes apparaitront à la personne du métier. En particulier, les modes de réalisation décrits ne se limitent pas à l'application à la projection d'une image sur une surface transparente. En particulier, les modes de réalisation décrits peuvent avoir des applications dans divers domaines utilisant des surfaces rétroréfléchissantes, non nécessairement transparentes, par exemple à des fins de signalisation. Dans certains cas, il peut en effet être souhaitable de pouvoir disposer d'une surface présentant une bonne efficacité en rétroréflexion pour des angles d'incidences variés. Dans le cas où la transparence n'est pas recherchée, on cherchera de préférence à maximiser le taux de recouvrement de l'écran par les portions rétroréfléchissantes. En outre, le matériau du film 103 pourra être non transparent. Par ailleurs, si la transparence de l'écran n'est pas requise, les métallisations réfléchissantes 107 ne sont pas nécessairement localisées sur les parois latérales et sur le fond des microrenfoncements 101, mais peuvent former une couche continue réalisée par dépôt conforme, revêtant toute la face 103a du film 103.

On notera que dans la présente description, le terme film a été employé pour désigner l'élément 103 de l'écran 100. Ce terme doit toutefois s'entendre de façon large, et inclut notamment des éléments similaires à des films tels que des feuilles, plaques, etc.

**Revendications**

1. Procédé de fabrication d'un moule (210) pour la fabrication d'un écran rétroréfléchissant (100), le moule comportant, du côté d'une face, une pluralité de cavités, chaque cavité ayant une forme de pyramide tronquée, le procédé comprenant les étapes successives suivantes :

   a) former des ouvertures (203) parallélépipédiques du côté d'une face d'un substrat (201) ;
   b) remplir les ouvertures (203) par une résine photosensible (205) ;
   c) insoler la résine (205) au moyen d'un faisceau lumineux incliné par rapport au fond des cavités parallélépipédiques, de façon qu'une partie de la résine (205) ne voie pas le faisceau d'insolation ; et
   d) retirer la partie insolée de la résine (205) et conserver la partie non insolée de la résine dans les ouverture de sorte à former lesdites cavités en forme de pyramide tronquée.

2. Procédé selon la revendication 1, dans lequel le substrat (201) comprend un empilement d'une couche support inférieure (201a), d'une couche intermédiaire (201b), et d'une couche supérieure (201c), l'épaisseur de la couche supérieure (201c) définissant la profondeur des cavités.

3. Procédé selon la revendication 2, dans lequel le matériau de la couche supérieure (201c) est gravable sélectivement par rapport à la couche intermédiaire (201b).

4. Procédé selon la revendication 2 ou 3, dans lequel la couche supérieure (201c) est en silicium et la couche intermédiaire (201b) est en oxyde de silicium.

5. Procédé selon l'une quelconque des revendications 1 à 4, dans lequel, à l'issue de l'étape d), chaque cavité comporte un fond sensiblement parallèle au plan moyen de l'écran, correspondant à la face sommitale (ABCD) de la pyramide tronquée, et deux premières parois latérales sensiblement orthogonales entre elles et sensiblement orthogonales au fond, correspondant à deux faces latérales (ABFE, ADHE) de la pyramide tronquée.

6. Procédé selon la revendication 5, dans lequel, à l'issue de l'étape d), chaque cavité (101) comporte en outre deux deuxièmes parois latérales inclinées par rapport au plan moyen de l'écran, correspondant à deux autres faces latérales (BCGF, DCGH) de la pyramide tronquée.

7. Procédé selon l'une quelconque des revendications 1 à 6, dans lequel, à l'issue de l'étape d), chaque cavité présente une ouverture d'entrée correspondant à la base (EFGH) de la pyramide tronquée.

8. Procédé selon l'une quelconque des revendications 1 à 7, dans lequel la base (EFGH) de la pyramide tronquée est carrée.

9. Procédé selon la revendication 8, dans lequel la face sommitale (ABCD) de la pyramide tronquée est carrée.

10. Procédé selon la revendication 9, dans lequel la longueur du côté de la base (EFGH) de la pyramide tronquée est sensiblement égale à deux fois la longueur du côté de la face sommitale (ABCD) de la pyramide tronquée.

11. Procédé selon l'une quelconque des revendications 1 à 10, dans lequel, à l'issue de l'étape d), les cavités ont toutes sensiblement la même profondeur (d).

12. Procédé selon l'une quelconque des revendications 1 à 11, dans lequel chaque cavité est entouré et séparé latéralement des autres cavités par une région non structurée du film substrat (201).

13. Procédé selon l'une quelconque des revendications 1 à 12, dans lequel le substrat est divisé en une pluralité de cellules de mêmes dimensions agencées en matrice selon des rangées et des colonne, chaque cellule comprenant une unique cavité et les cavités ayant toutes les mêmes dimensions, les positions des cavités au sein de leurs cellules respectives variant selon une distribution aléatoire ou pseudo-aléatoire, ou les orientations des cavités au sein de leurs cellules respectives variant en fonction de la position de la cellule dans la matrice.

14. Procédé de fabrication d'un écran rétroréfléchissant (100) comportant une étape de moulage d'une face d'un film (103) au moyen d'un moule réalisé par un procédé selon l'une quelconque des revendications 1 à 13, suivie d'une étape de dépôt d'une couche métallique réfléchissante sur toute ladite face (103a) du film (103).

**15.** Procédé selon la revendication 14, comportant en outre une étape de retrait de la couche métallique réfléchissante en dehors des microrenfoncements (101) correspondant aux cavités du moule, par polissage mécano-chimique.

**Patentansprüche**

**1.** Verfahren zur Herstellung einer Form (210) zur Herstellung eines retroreflektierenden Schirms (100), wobei die Form auf einer Seitenfläche eine Vielzahl von Hohlräumen aufweist, wobei jeder Hohlraum die Form eines Pyramidenstumpfs hat, wobei das Verfahren die folgenden aufeinanderfolgenden Schritte aufweist:

a) Ausbilden von quaderförmigen Öffnungen (203) auf der Seite einer Fläche eines Substrats (201);
b) Füllen der Öffnungen (203) mit einem lichtempfindlichen Harz (205);
c) Belichten des Harzes (205) mittels eines Lichtstrahls, der relativ zum Boden der quaderförmigen Hohlräume geneigt ist, so dass ein Teil des Harzes (205) den Belichtungsstrahl nicht sieht; und
d) Entfernen des bestrahlten Teils des Harzes (205) und Zurückhalten des nicht bestrahlten Teils des Harzes in den Öffnungen, um die Hohlräume in Form eines Pyramidenstumpfs zu bilden.

**2.** Verfahren nach Anspruch 1, wobei das Substrat (201) einen Stapel aus einer unteren Trägerschicht (201a), einer Zwischenschicht (201b) und einer oberen Schicht (201c) aufweist, wobei die Dicke der oberen Schicht (201c) die Tiefe der Hohlräume definiert.

**3.** Verfahren nach Anspruch 2, wobei das Material der oberen Schicht (201c) relativ zur Zwischenschicht (201b) selektiv ätzbar ist.

**4.** Verfahren nach Anspruch 2 oder 3, wobei die obere Schicht (201c) aus Silizium besteht und die Zwischenschicht (201b) aus Siliziumoxid besteht.

**5.** Verfahren nach einem der Ansprüche 1 bis 4, bei dem am Ende von Schritt d) jeder Hohlraum einen Boden, der im Wesentlichen parallel zur Mittelebene des Schirms ist und der Deckfläche (ABCD) des Pyramidenstumpfes entspricht, und zwei erste Seitenwände aufweist, die im Wesentlichen orthogonal zueinander und im Wesentlichen orthogonal zum Boden sind und zwei Seitenflächen (ABFE, ADHE) des Pyramidenstumpfes entsprechen.

**6.** Verfahren nach Anspruch 5, wobei am Ende von Schritt d) jeder Hohlraum (101) ferner zwei zweite Seitenwände aufweist, die relativ zur Mittelebene des Schirms geneigt sind und zwei anderen Seitenflächen (BCGF, DCGH) des Pyramidenstumpfes entsprechen.

**7.** Verfahren nach einem der Ansprüche 1 bis 6, wobei am Ende von Schritt d) jeder Hohlraum eine Einlassöffnung aufweist, die der Basis (EFGH) des Pyramidenstumpfes entspricht.

**8.** Verfahren nach einem der Ansprüche 1 bis 7, wobei die Basis (EFGH) des Pyramidenstumpfes quadratisch ist.

**9.** Verfahren nach Anspruch 8, wobei die Deckfläche (ABCD) des Pyramidenstumpfes quadratisch ist.

**10.** Verfahren nach Anspruch 9, wobei die Länge der Basis (EFGH) Pyramidenstumpfes im Wesentlichen gleich der doppelten Länge der Seite der Deckfläche (ABCD) Pyramidenstumpfes ist.

**11.** Verfahren nach einem der Ansprüche 1 bis 10, wobei am Ende von Schritt d) alle Hohlräume im Wesentlichen die gleiche Tiefe (d) aufweisen.

**12.** Verfahren nach einem der Ansprüche 1 bis 11, wobei jeder Hohlraum von den anderen Hohlräumen durch einen unstrukturierten Bereich des Substratfilms (201) umgeben und seitlich getrennt ist.

**13.** Verfahren nach einem der Ansprüche 1 bis 12, wobei das Substrat in eine Vielzahl von Zellen mit gleichen Abmessungen unterteilt ist, die in einer Matrix in Zeilen und Spalten angeordnet sind, wobei jede Zelle einen einzelnen Hohlraum aufweist und die Hohlräume alle gleiche Abmessungen aufweisen, wobei die Positionen der Hohlräume innerhalb ihrer jeweiligen Zellen gemäß einer zufälligen oder pseudozufälligen Verteilung variieren oder die Ausrichtungen der Hohlräume innerhalb ihrer jeweiligen Zellen gemäß der Position der Zelle innerhalb der Matrix variieren.

14. Verfahren zur Herstellung eines retroreflektierenden Schirms (100), aufweisend einen Schritt des Ausformens einer Seite eines Films (103) mittels einer Form, die durch ein Verfahren gemäß einem der Ansprüche 1 bis 13 hergestellt wurde, gefolgt von einem Schritt des Aufbringens einer reflektierenden Metallschicht auf die gesamte Seite (103a) des Films (103),.

15. Verfahren nach Anspruch 14, das ferner einen Schritt des Entfernens der reflektierenden Metallschicht außerhalb von Mikro-Eindrückungen (101), die den Hohlräumen der Form entsprechen, durch chemisch-mechanisches Polieren aufweist.

**Claims**

1. Method for manufacturing a mold (210) for manufacturing a retroreflective screen (100), the mold comprising, on one face side, a plurality of cavities, each cavity having the shape of a truncated pyramid, the method comprising the following consecutive steps:

    a) forming parallelepiped openings (203) on the side of one face of a substrate (201);
    b) filling the openings (203) with a photosensitive resin (205);
    c) insolating the resin (205) by means of a light beam inclined relative to the bottom of the parallelepiped cavities, so that part of the resin (205) does not see the insolating beam; and
    d) removing the insolated portion of the resin (205) and retaining the non-insolated portion of the resin in the openings so as to form said cavities in the shape of a truncated pyramid.

2. Method according to claim 1, wherein the substrate (201) comprises a stack of a lower support layer (201a), an intermediate layer (201b), and a upper layer (201c), the thickness of the upper layer (201c) defining the depth of the cavities.

3. Method according to claim 2, wherein the material of the upper layer (201c) is selectively etchable relative to the intermediate layer (201b).

4. Method according to claim 2 or 3, wherein the upper layer (201c) is made of silicon, and the intermediate layer (201b) is made of silicon oxide.

5. Method according to any one of claims 1 to 4, wherein, at the end of step d), each cavity includes a bottom substantially parallel to the mean plane of the screen, corresponding to the summit face (ABCD) of the truncated pyramid, and two first sidewalls substantially orthogonal to each other and substantially orthogonal to the bottom, corresponding to two side faces (ABFE, ADHE) of the truncated pyramid.

6. Method according to claim 5, wherein, at the end of step d), each cavity (101) further includes two second sidewalls inclined relative to the mean plane of the screen, corresponding to two other side faces (BCGF, DCGH) of the truncated pyramid.

7. Method according to any one of claims 1 to 6, wherein, at the end of step d), each cavity has an inlet opening corresponding to the base (EFGH) of the truncated pyramid.

8. Method according to any one of claims 1 to 7, wherein the base (EFGH) of the truncated pyramid is square.

9. Method according to claim 8, wherein the summit face (ABCD) of the truncated pyramid is square.

10. Method according to claim 9, wherein the length of the base side (EFGH) of the truncated pyramid is substantially equal to twice the length of the side of the summit face (ABCD) of the truncated pyramid.

11. Method according to any one of claims 1 to 10, wherein, at the end of step d), the cavities all have substantially a same depth (d).

12. Method according to any one of claims 1 to 11, wherein each cavity is surrounded and laterally separated from the other cavities by an unstructured region of the substrate film (201).

13. Method according to any one of claims 1 to 12, wherein the substrate is divided into a plurality of cells having same dimensions arranged in a matrix in rows and columns, each cell comprising a single cavity and the cavities all having same dimensions, the positions of the cavities within their respective cells varying according to a random or pseudo-random distribution, or the orientations of the cavities within their respective cells varying according to the position of the cell within the matrix.

14. Method for manufacturing a retroreflective screen (100) including a step of molding one face of a film (103) by means of a mold produced by a method according to any one of claims 1 to 13, followed by a step of depositing a reflective metal layer over whole said face (103a) of the film (103).

15. Method according to claim 14, further including a step of removing the reflective metal layer outside micro-recesses (101) corresponding to the cavities of the mold, by chemical-mechanical polishing.

Fig 1A

Fig 1B

Fig 1C

(1)          (2)          Fig 2A

(1)          (2)          Fig 2B

(1)  (2)  Fig 2C

(1)  (2)  Fig 2D

(1)  (2)  Fig 2E

101
105
110

Fig 3

101
105
110

Fig 4

101
105
110

Fig 5

Fig 6

Fig 7

Fig 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1913341
- US 2017059862 A
- US 2017197338 A